# EUROPÄISCHE PATENTSCHRIFT

(11) **EP 1 129 819 B1**
(45) Veröffentlichungstag und Bekanntmachung des Hinweises auf die Patenterteilung: **02.05.2003**
(21) Anmeldenummer: 01101594.8
(22) Anmeldetag: 25.01.2001
(51) Int. Cl.: B24B 23/03, B24B 41/00, B25F 5/00, B25F 5/02

(54) **Gehäuseelement mit Lagerung eines Getriebeelements**
Casing element with bearing for transmission
Elément d'une boîte avec paliers pour un élément de transmission

(30) Priorität: 03.03.2000 DE 10010108
(43) Veröffentlichungstag der Anmeldung: 05.09.2001
(73) Patentinhaber: Kress-elektrik GmbH + Co. Elektromotorenfabrik, D-72406 Bisingen (DE)
(72) Erfinder: Binder, Alfred, 72406 Bisingen (DE); Gaiser, Siegbert, 72336 Balingen (DE); Trinks, Roman, 72406 Bisingen (DE)
(74) Vertreter: Jakelski, Joachim, Dr.

(56) Entgegenhaltungen:
- WO-A-94/19152
- US-A- 4 140 446
- US-A- 4 268 233
- US-A- 4 905 772

## Beschreibung

Die Erfindung betrifft ein leicht deformierbares und/oder beschädigbares, insbesondere aus Leichtmetall oder Kunststoff bestehendes Gehäuseelement mit einer Lagerung eines radialen und/oder axialen Vibrationen oder Stoßbelastungen unterworfenen Getriebeelements, gemäß dem Obenbegriff des Anspruchs 1. Ein solches Gehäuseelement ist aus US 4 140 446 A bekannt.

Derartige Gehäuseelemente werden beispielsweise bei Handwerkzeugen, beispielsweise bei Exzentertellerschleifern, die zum Beispiel aus der DE 197 27 700 A1, der DE 197 38 095 A1, der DE 42 33 729 A1 oder der DE 36 25 671 C1 hervorgehen, eingesetzt.

Bei diesen Exzentertellerschleifern ist eine Schleiftellereinheit mit einem ersten Wälzelement verbunden, das an einem zweiten, in dem Gehäuse angeordneten Wälz-element abwälzt. Das zweite drehfest, aber axial verschieblich angeordnete Wälzelement ist ein Getriebe- oder Antriebselement, welches durch das Abwälzen des ersten mit der Schleiftellereinheit verbundenen Wälzelements radialen und/oder axialen Schwingungen oder Stoßbelastungen unterworfen ist. Dieses Wälzelement ist beispielsweise ein aus Stahl bestehendes Innenstirnzahnrad, das in einem aus Leichtmetall bestehenden Gehäuse angeordnet ist. Durch die radialen und/oder axialen Vibrationen und Stoßbelastungen entstehen nun beispielsweise aufgrund von Reiberosion Beschädigungen an dem Leichtmetallgehäuse, die zu einer Spielvergrößerung führen.

Aufgabe der Erfindung ist es daher, die Lagerung eines derartigen radialen und/oder axialen Vibrationen und/oder Stoßbelastungen unterworfenen Getriebeund/oder Antriebselements dahingehend zu verbessern, dass Beschädigungen oder Deformationen an dem Gehäuse und dadurch Spielvergrößerungen vermieden werden können, so dass sich die Standzeit einer solchen Lagerung vergrößert.

Diese Aufgabe wird durch die Merkmale des Anspruchs 1 gelöst.

Durch das wenigstens eine Dämpfungs- und Stabilisierungsblech wird auf sehr vorteilhafte Weise vermieden, dass das erheblichen Schwingungen unterworfene Getriebe- und/oder Antriebselement Beschädigungen an dem leicht beschädigbaren oder deformierbaren Gehäuse hervorrufen kann.

Das Getriebe- und/oder Antriebselement kann bei einer vorteilhaften Ausführungsform axial verschieblich geführt sein. Es ist beispielsweise ein Hohlzahnrad eines Exzenterantriebs, an dessen Umfang das wenigstens eine elastisch deformierbare Puffer- und Führungselement sowie das wenigstens eine Dämpfungsund Stabilisierungsblech angeordnet sind.

Das wenigstens eine elastisch deformierbare Puffer- und Führungselement ist bei einer sehr vorteilhaften Ausführungsform eine Mehrzahl von vorzugsweise symmetrisch über den Umfang des Hohlzahnrads verteilte stabförmige Pufferelemente, die in auf sie angepassten Ausnehmungen am Umfang des Hohlzahnrads angeordnet sind.

Als Dämpfungs- und Stabilisierungsblech kommt vorteilhafterweise eine Mehrzahl von dünnwandigen Stahlblechen in Frage, die zwischen dem ebenfalls vorzugsweise aus Stahl bestehenden Hohlzahnrad und dem beispielsweise aus Leichtmetall bestehenden Gehäuse angeordnet sind.

Die dünnwandigen Stahlbleche sind vorzugsweise benachbart zu den stabförmigen, elastisch deformierbaren Puffer- und Führungselementen angeordnet. Schwingungen und insbesondere Stoßbelastungen des Getriebe- und/oder Antriebselements werden auf diese Weise weitestgehend durch die elastisch deformierbaren Puffer- und Führungselemente gedämpft. Kommt es jedoch aufgrund sehr großer Schwingungsamplituden zu Berührungen zwischen dem Hohlzahnrad und dem Gehäuse, können auf sehr vorteilhafte Weise Beschädigungen des Gehäuses durch die benachbart zu den Puffer- und Führungselementen angeordneten Stahlbleche verhindert werden.

Weitere Vorteile und Merkmale der Erfindung sind Gegenstand der nachfolgenden Beschreibung sowie der zeichnerischen Darstellung eines Ausführungsbeispiels der Erfindung.

In Fig. 1 ist schematisch in Explosionsdarstellung ein Exzenterantrieb eines Exzentertellerschleifers dargestellt.

In Fig. 2 ist eine Schnittdarstellung eines Exzentertellerantriebs eines Exzentertellerschleifers gezeigt.

Die Erfindung wird nachfolgend in Verbindung mit einem solchen Exzentertellerschleifer näher erläutert. Es versteht sich aber, dass die Erfindung nicht auf Exzentertellerschleifer beschränkt ist, sondern vielmehr bei beliebigen Handwerkzeugen oder anderen Vorrichtungen, bei denen starken Schwingungen und/oder Stoßbelastungen unterworfene, zumeist hartmetallische Bauelemente in einem leicht deformierbaren oder beschädigbaren, zumeist leichtmetallischen Gehäuse angeordnet sind, zum Einsatz kommen kann.

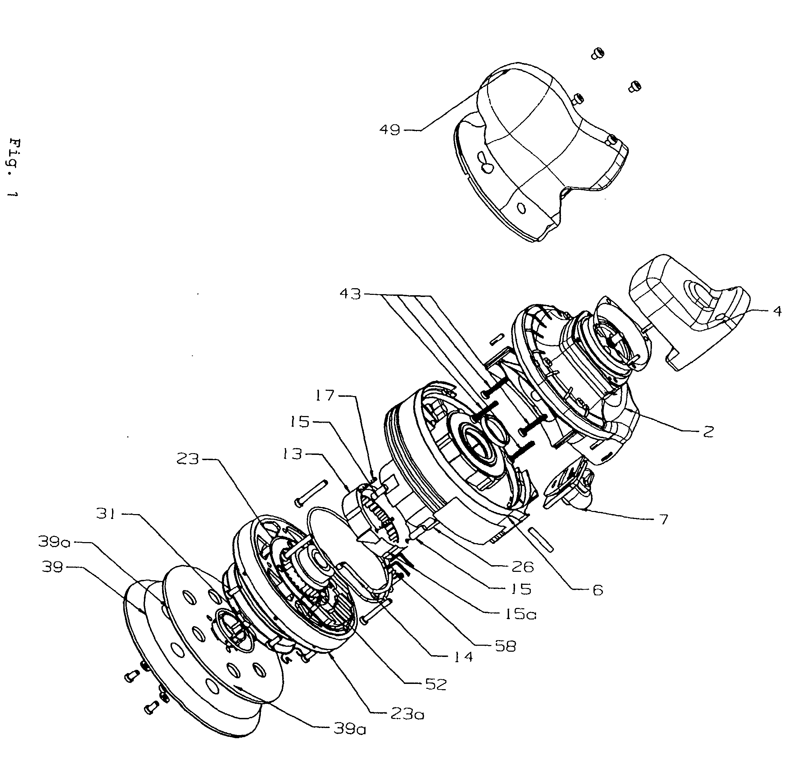

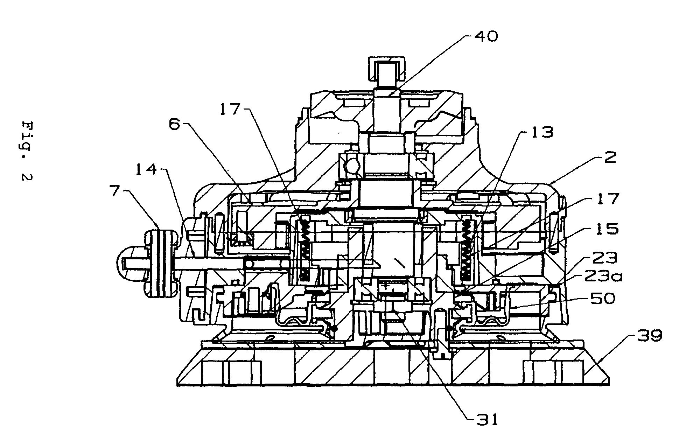

Der Antriebsmechanismus eines Exzentertellerschleifers, dargestellt in Figur 1 und 2, umfasst ein Gehäuseelement 6, in dem ein Innenstirnzahnrad 13 drehfest, aber axialverschieblich entgegen der Rückstellkraft von Synchronisationsdruckfedern 17 angeordnet ist. In das Innenstirnzahnrad 13 greift ein Aussenstirnzahnrad 52 ein, welches zusammen mit einer Schleiftellereinheit 39 sowie Lager- und Dichtungselementen eine komplette Baugruppe bildet. Zur Abdichtung dieser kompletten Baugruppe gegenüber eindringendem Schleifstaub ist ein Dichtungselement in Form eines Dichtungsbalgs 50 vorgesehen, der einerseits an der Baugruppe, andererseits an dem Getriebedeckel 23 befestigt ist. Die Baugruppe wird von einer exzentrischen Welle 40 von einem (nicht dargestellten) Elektromotor auf an sich bekannte Weise angetrieben (vergl. Fig. 2). An dem Getriebedeckel 23 ist ein Luftleitelement 23a angeordnet, welches eine optimale Führung des abzusaugenden, mit Schleifpartikeln versehenen Luftstroms ermöglicht (vergl. Fig. 2).

Das Innenstirnzahnrad 13 ist durch ein Schaltgestänge, welches durch einen Schaltknopf 7 betätigbar ist, in Axialrichtung verschieblich. Hierzu weist es an seiner unteren, der Schleiftellereinheit 39 zugewandten Seite Schrägen 58 auf, auf die die beiden Arme eines Schaltgestänges 14 durch Betätigung des Schaltknopfes 7 einen parallel zur Schleiftellereinheit 39 gerichteten Druck und hierdurch eine Axialverschiebung des Innenstirnzahnrades entgegen der Rückstellkraft von Synchronisationsdruckfedern 17 ausüben. Die Verstellung entspricht der aus der DE 197 27 700 A1 bekannten, auf die vorliegend Bezug genommen wird. Die Synchronisationsdruckfedern 17 ermöglichen nicht nur eine Stabilisierung des Innenstirnzahnrads 13 in einer vorgegebenen Position, sondern auch ein synchronisiertes Einrücken des Aussenstirnzahnrads 52 in das Innenstirnzahnrad 13. Durch die Synchronisationsdruckfedern 17 können auch geringfügige Lageungenauigkeiten des Aussenstirnzahnrads 52 und des Innenstirnzahnrads 13 kompensiert werden.

Der Exzentertellerschleifer hat im wesentlichen zwei Schaltstellungen.

In einer ersten Schaltstellung ist das Aussenstirnzahnrad 52 in Eingriff mit dem Innenstirnzahnrad 13. In dieser Schaltstellung rotiert die Schleiftellereinheit 39 um die Exzenterwelle. Gleichzeitig wälzt das Aussenstirnzahnrad 52 in dem Innenstirnzahnrad 13 ab, wodurch eine kreisende Bewegung und Vibrationen und/oder Stoßbelastungen auf das Gehäuseelement 6 hervorgerufen wird. Dieser kreisenden Bewegung ist die Drehung der Schleiftellereinheit 39 um seine eigene Achse überlagert, so dass sich insgesamt eine hypozykloidische Bewegung ergibt, welche beispielsweise ein Abtragschleifen ermöglicht.

In einer zweiten Schaltstellung ist das Aussenstirnzahnrad 52 aus dem Innenstirnzahnrad 13 ausgerückt. In diesem Falle dreht sich die Schleiftellereinheit 39 lediglich aufgrund einer Friktionsmitnahme exzentrisch um die Exzenterwelle. Die vorbeschriebene hypozykloidische Bewegung entsteht jedoch nicht. Dieser Betriebszustand kann beispielsweise zum Feinschleifen eingesetzt werden.

Die Lagerung des Innenstirnzahnrads 13 in dem Gehäuseteil 6 umfasst folgende Merkmale:

In dem Innenstirnzahnrad 13 sind vorzugsweise symmetrisch um den Aussenumfang verteilt Ausnehmungen 15a vorgesehen, in die beispielsweise zylindrische Führungs- und Pufferelemente 15, die aus einem elastomeren Material bestehen und elastisch deformierbar sind, eingepasst sind. Diese Führungs- und Pufferelemente 15 ermöglichen einerseits eine weitestgehend schwingungs- und stoßentkoppelte Lagerung des Innenstirnzahnrads 13 in dem Gehäuseelement 6, andererseits aufgrund der Ausnehmungen 15a und ihrer zylindrischen Gestalt eine besonders vorteilhafte axiale Führung des Innenstirnzahnrads 13, die insbesondere eine Axialverschiebung des Innenstirnzahnrads 13 ermöglicht.

Benachbart zu den Führungs- und Dämpfungselementen sind am Umfang des Innenstirnzahnrads Dämpfungs- und Stabilisierungsbleche 26 angeordnet, die zwischen dem Aussenumfang des Innenstirnzahnrads 13 und dem Innenumfang einer zu diesem komplementär ausgebildeten Ausnehmung in dem Gehäuseelement 6 angeordnet sind. Durch diese Dämpfungs- und Stabilisierungsbleche 26 werden Berührungen des Innenstirnzahnrads 13 und des Gehäuseelements 6 aufgrund von Schwingungen mit großer Amplitude und hierdurch Deformationen und/oder Beschädigungen des leichtmetallischen Gehäuselements 6, die beispielsweise durch Reiberosion entstehen können, vermieden. Die Stahlbleche 26, die zum Beispiel 1/10 mm dick sein können, dienen auf diese Weise einerseits zur Dämpfung und Stabilisierung, andererseits aber auch dazu, Beschädigungen des Gehäuseelements 6 zu verhindern.

Die gesamte oben beschriebene Baugruppe wird zusammen mit der Welle 40, Absaugturbine, Absaugstutzen sowie Lagerelementen und einem Getriebekopf 4, beispielsweise mittels Schrauben 43, an einem Gehäuseelement 2 befestigt. Durch das Luftleitelement 23 und in der Schleiftellereinheit 39 angeordnete Öffnungen 39a wird eine optimale Staubabsaugung des bei einem Schleifvorgang entstehenden Schleifstaubes ermöglicht. An dem Getriebekopf 4 ist eine Griffhaube 49 lösbar befestigt.

## Patentansprüche

1. Leicht deformierbares und/oder beschädigbares, insbesondere aus Leichtmetall oder Kunststoff bestehendes Gehäuseelement (6) mit einer Lagerung eines radialen und/oder axialen Vibrationen und/oder Stoßbelastungen unterworfenen Getriebe- und/oder Antriebselements (13), wobei zwischen dem Getriebeelement und/oder Antriebselement (13) und dem Gehäuseelement (6) wenigstens ein elastisch deformierbares Puffer- und Führungselement (15) angeordnet ist, **dadurch gekennzeichnet, dass** zwischen dem Getriebeelement und/oder Antriebselement (13) und dem Gehäuseelement (6)
- wenigstens ein Dämpfungs- und Stabilisierungsblech (26)
angeordnet ist.

2. Gehäuseelement nach Anspruch 1, **dadurch gekennzeichnet, dass** das Getriebe- und/oder Antriebselement (13) axial verschieblich geführt ist.

3. Gehäuseelement nach Anspruch 1 oder 2, **dadurch gekennzeichnet, dass** das Getriebe- und/oder Antriebselement ein Hohlzahnrad (13) ist, an dessen Umfang das wenigstens eine elastisch deformierbare Puffer- und Führungselement (15) sowie das wenigstens eine Dämpfungs- und Stabilisierungsblech (26) angeordnet sind.

4. Gehäuseelement nach Anspruch 3, **dadurch gekennzeichnet, dass** das Hohlzahnrad (13) aus Stahl besteht.

5. Gehäuseelement nach Anspruch 3 oder 4, **dadurch gekennzeichnet, dass** das wenigstens eine elastisch deformierbare Puffer- und Führungselement eine Mehrzahl von vorzugsweise symmetrisch über den Umfang des Hohlzahnrads verteilt angeordnete stabförmige Pufferelemente (15) ist, die in auf sie angepassten Ausnehmungen (15a) am Umfang des Hohlzahnrads (13) angeordnet sind.

6. Gehäuseelement nach einem der Ansprüche 1 bis 5, **dadurch gekennzeichnet, dass** das wenigstens eine Dämpfungs- und Stabilisierungsblech eine Mehrzahl von dünnwandigen Stahlblechen (26) ist.

7. Gehäuseelement nach Anspruch 6, **dadurch gekennzeichnet, dass** die dünnwandigen Stahlbleche (26) benachbart zu den stabförmigen Pufferelementen (15) angeordnet sind.

8. Exzentertellerschleifer mit einer von einem Antriebsmotor angetriebenen Exzenterwelle, an der eine Schleiftellereinheit (39) exzentrisch und achsparallel zur Antriebsachse gelagert ist, mit einem an der Schleiftellereinheit (39) angeordneten Wälzelement (52), mit einem an einem Gehäuseelement (6) drehfest angeordneten weiteren Wälzelement (13) und mit einem Schaltelement (7, 14), durch welches die beiden Wälzelemente (52, 13) durch Axialverschiebung wenigstens eines (13) der beiden Wälzelemente so in Eingriff bringbar sind, dass sie aneinander abwälzen, **dadurch gekennzeichnet, dass** das drehfest angeordnete weitere Wälz-element (13) in dem Gehäuseelement (6) gemäß der Ansprüche 1 bis 7 gelagert ist.

9. Exzentertellerschleifer nach Anspruch 8, **dadurch gekennzeichnet, dass** das an der Schleiftellereinheit (39) angeordnete Wälzelement ein Aussenstirnzahnrad (52) ist, und dass das weitere, drehfest, aber axial verschiebliche Wälzelement ein in dem Gehäuseelement (6) gelagertes Innenstirnzahnrad (13) ist.

## Claims

1. A housing element (6) - easily deformable and/or capable of being damaged and, in particular consisting of light metal or plastics material - with a mounting of a gearing and/or driving element (13) subject to radial and/or axial vibrations and/or impact loads, wherein at least one resiliently deformable buffer and guide element (15) is arranged between the gearing element and/or driving element (13) and the housing element (6), **characterized in that** at least one damping and stabilizing metal sheet (26) is arranged between the gearing element and/or driving element (13) and the housing element (6).

2. A housing element according to Claim 1, **characterized in that** the gearing and/or driving element (13) is guided so as to be axially displaceable.

3. A housing element according to Claim 1 or 2, **characterized in that** the gearing and/or driving element is a hollow gearwheel (13), on the periphery of which the at least one resiliently deformable buffer and guide element (15) and the at least one damping and stabilizing metal sheet (26) are arranged.

4. A housing element according to Claim 3, **characterized in that** the hollow gearwheel (13) consists of steel.

5. A housing element according to Claim 3 or 4, **characterized in that** the at least one resiliently deformable buffer and guide element is a plurality of rod-shaped buffer elements (15) which are arranged distributed, preferably symmetrically, over the periphery of the hollow gearwheel and which are arranged in recesses (15a) adapted to them on the periphery of the hollow gearwheel (13).

6. A housing element according to one of Claims 1 to 5, **characterized in that** the at least one damping and stabilizing metal sheet is a plurality of thin-walled steel sheets (26).

7. A housing element according to Claim 6, **characterized in that** the thin-walled steel sheets (26) are arranged adjacent to the rod-shaped buffer elements (15).

8. An eccentric-disc grinder with an eccentric shaft which is driven by a drive motor and on which a grinding-disc unit (39) is mounted eccentrically and axially parallel to the driving shaft, with a rolling element (52) arranged on the grinding-disc unit (39), with a further rolling element (13) arranged on a housing element (6) in a rotationally fixed manner, and with a switching element (7, 14) by which the two rolling elements (52, 13) can be brought into engagement by axial displacement of at least one (13) of the two rolling elements in such a way that they roll over each other, **characterized in that** the further rolling element (13) arranged in a rotationally fixed manner is mounted in the housing element (6) according to Claims 1 to 7.

9. An eccentric-disc grinder according to Claim 8, **characterized in that** the rolling element arranged on the grinding-disc unit (39) is an external spur gear (52), and the further rolling element arranged in a rotationally fixed but axially displaceable manner is an internal spur gear (13) mounted in the housing element (6).

## Revendications

1. Elément de boîtier (6) facilement déformable et/ou détériorable , réalisé notamment en métal léger ou en matière plastique avec un montage d'un élément de transmission et/ou d'entraînement (13) soumis à des vibrations et/ou des contraintes par chocs, radiales ou axiales, avec au moins un élément élastiquement déformable, jouant le rôle de tampon et de stabilisateur (15) monté entre l'élément de transmission et/ou d'entraînement (13) et l'élément de boîtier (6),
**caractérisé en ce que**
au moins une tôle d'amortissement et de stabilisation (26) est montée entre l'élément de transmission et/ou d'entraînement(13) et l'élément de boîtier (6).

2. Elément de boîtier selon la revendication 1,
**caractérisé en ce que**
l'élément de transmission et/ou d'entraînement (13) peut coulisser axialement.

3. Elément de boîtier selon la revendication 1 ou 2,
**caractérisé en ce que**
l'élément de transmission et/ou d'entraînement est un pignon creux (13) à la périphérie duquel sont disposés au moins un élément tampon et stabilisateur (15) élastiquement déformable et également au moins la tôle d'amortissement et de stabilisation (26).

4. Elément de boîtier selon la revendication 3 ou 4,
**caractérisé en ce que**
le pignon creux (13) est en acier.

5. Elément de boîtier selon la revendication 3 ou 4,
**caractérisé en ce que**
l'élément tampon et stabilisateur élastiquement déformable, au nombre d'un au moins, est constitué par une pluralité d'éléments tampons (15) en forme de barres, répartis de préférence symétriquement sur la périphérie du pignon creux et disposés dans des évidements (15a) qui leur sont adaptés, situés à la périphérie du pignon creux (13).

6. Elément de boîtier selon l'une des revendications 1 à 5,
**caractérisé en ce que**
la tôle d'amortissement et de stabilisation, au nombre d'une au moins, est constituée d'une pluralité de tôles d'acier (26), minces.

7. Elément de boîtier selon la revendication 6,
**caractérisé en ce que**
les tôles minces d'acier (26) sont disposés près des éléments tampons (15) en forme de barres.

8. Ponceuse à excentrique et meule assiette comprenant :
- un arbre à excentrique entraîné par un moteur et sur lequel est monté excentriquement une unité à meule assiette (39) d'axe parallèle à l'axe d'entraînement et dans laquelle est monté un élément de roulement (52),
- un autre élément de roulement (13) solidaire en rotation de l'élément de boîtier (6),
- un élément de commutation (7,14) par lequel les deux éléments de rotation (52,13) peuvent, par coulissement, d'au moins un (13) des deux éléments de roulement, être amenés en prise de manière à rouler l'un sur l'autre,
**caractérisé en ce que**
l'autre élément de roulement (13), solidaire en rotation de l'élément de boîtier (6), est monté selon les revendications 1 à 7.

9. Ponceuse à excentrique et meule assiette selon la revendication 8,
**caractérisé en ce que**
l'élément de roulement monté sur l'unité (39) à meule assiette est un pignon à denture externe (52) tandis que l'autre élément de roulement, solidaire en rotation mais coulissant axialement, est un pignon à denture interne (13) monté dans l'élément de boîtier (6).
